# EUROPEAN PATENT APPLICATION

(11) **EP 2 177 731 A1**
(43) Date of publication of application: **21.04.2010**
(21) Application number: 08792019.5
(22) Date of filing: 25.07.2008
(51) Int. Cl.: F01N 3/20, B01D 53/94, F01N 3/08, F01N 3/24, F01N 3/28

(54) **INTERNAL COMBUSTION ENGINE EXHAUST AIR PURIFICATION DEVICE**

(30) Priority: 08.08.2007 JP 2007206932
(71) Applicant: Toyota Jidosha Kabushiki Kaisha, Toyota-shi, Aichi 471-8571 (JP)
(72) Inventor: TOSHIOKA, Shunsuke, Toyota-shi Aichi 471-8571 (JP); ODA, Tomihisa, Toyota-shi Aichi 471-8571 (JP); TANAI, Yutaka, Toyota-shi Aichi 471-8571 (JP); ASAURA, Shinya, Toyota-shi Aichi 471-8571 (JP)
(74) Representative: Kuhnen & Wacker
(86) International application number: PCT/JP2008/063806
(87) International publication number: WO 2009/020053

(57) **Abstract**

In an internal combustion engine, an NOₓ selective reduction catalyst (15) is arranged in the engine exhaust passage, and the amount of deposition of the HC deposited at the NOₓ selective reduction catalyst (15) is estimated. When the estimated HC deposition amount exceeds a predetermined allowable deposition amount, the NOₓ selective reduction catalyst (15) is raised in temperature to make the deposited HC desorb from the NOₓ selective reduction catalyst (15), and thereby the NOₓ selective reduction catalyst (15) from HC poisoning is restored.

## Description

### TECHNICAL FIELD

The present invention relates to an exhaust purification device of an internal combustion engine.

### BACKGROUND ART

Known in the art is an internal combustion engine arranging an NOₓ selective reduction catalyst in an engine exhaust passage, arranging an oxidation catalyst inside an engine exhaust passage upstream of the NOₓ selective reduction catalyst, feeding urea to the NOₓ selective reduction catalyst, and using ammonia generated from the urea to selectively reduce the NOₓ contained in the exhaust gas (for example, see Japanese Patent Publication (A) No. 2005-23921). In this internal combustion engine, the NOₓ selective reduction catalyst adsorbs the ammonia, and the adsorbed ammonia reacts with the NOₓ contained in the exhaust gas whereby the NOₓ is reduced.

In this regard, in this internal combustion engine, usually the majority of the HC exhausted from the engine is oxidized in the oxidation catalyst, but part of the HC flows into the NOₓ selective reduction catalyst without being oxidized by the oxidation catalyst and deposits at the NOₓ selective reduction catalyst. In this regard, if the HC deposits at the NOₓ selective reduction catalyst, the problem will arise that the NOₓ selective reduction catalyst will no longer adsorb the ammonia and therefore the NOₓ purification rate will fall.

### DISCLOSURE OF THE INVENTION

An object of the present invention is to provide an exhaust purification device of an internal combustion engine NOₓ able to obtain a good NOₓ purification rate even if HC deposits at the selective reduction catalyst.

According to the present invention, there is provided an exhaust purification device of an internal combustion engine arranging an NOₓ selective reduction catalyst in an engine exhaust passage, feeding urea to said NOₓ selective reduction catalyst, and using ammonia generated from the urea to selectively reduce NOₓ contained in exhaust gas, wherein HC deposition estimating means for estimating an amount of HC deposited at said NOₓ selective reduction catalyst is provided, and a temperature of the NOₓ selective reduction catalyst is raised to make deposited HC desorb from the NOₓ selective reduction catalyst when an amount of deposition of HC estimated by the HC deposition estimating means exceeds a predetermined allowable deposition amount, and thereby restores the NOₓ selective reduction catalyst from HC poisoning.

In this way, in the present invention, when the amount of deposition of HC at the NOₓ selective reduction catalyst exceeds an allowable deposition amount, the NOₓ selective reduction catalyst is raised in temperature so as to recover the HC poisoning of the NOₓ selective reduction catalyst and thereby obtain a good NOₓ purification rate.

### BRIEF DESCRIPTION OF THE DRAWINGS

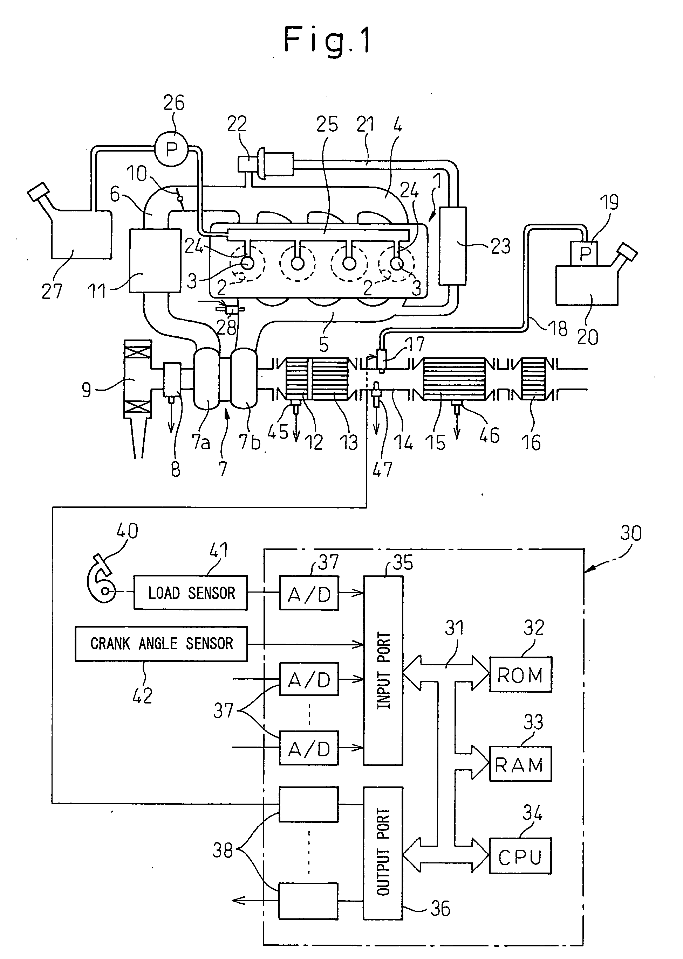

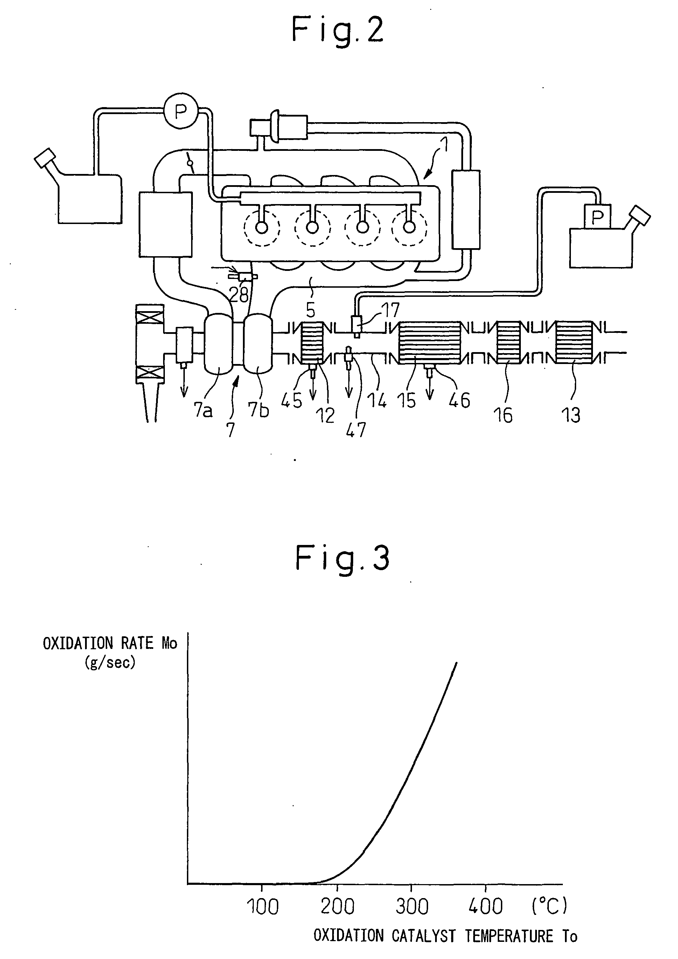

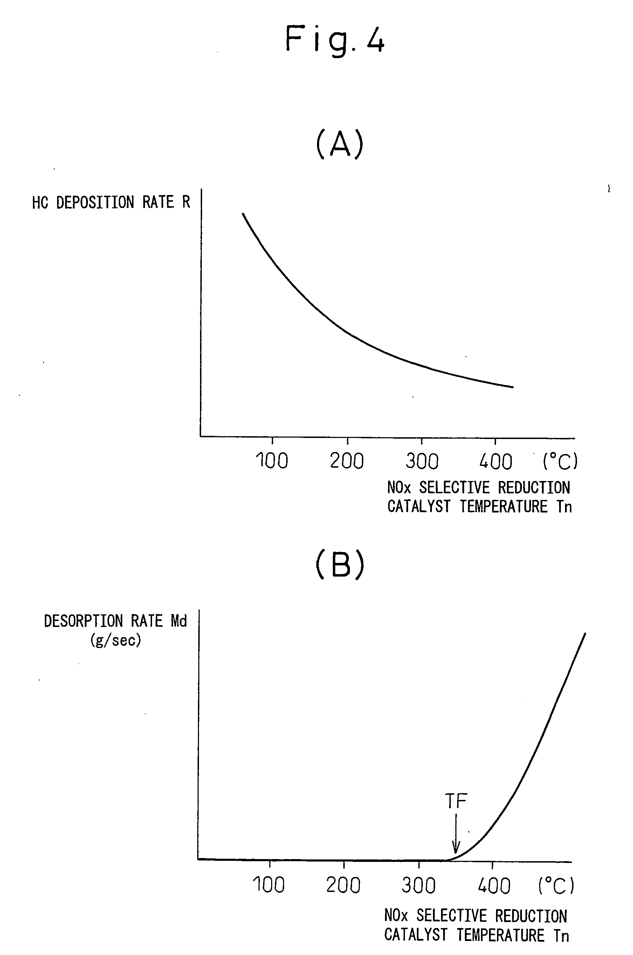

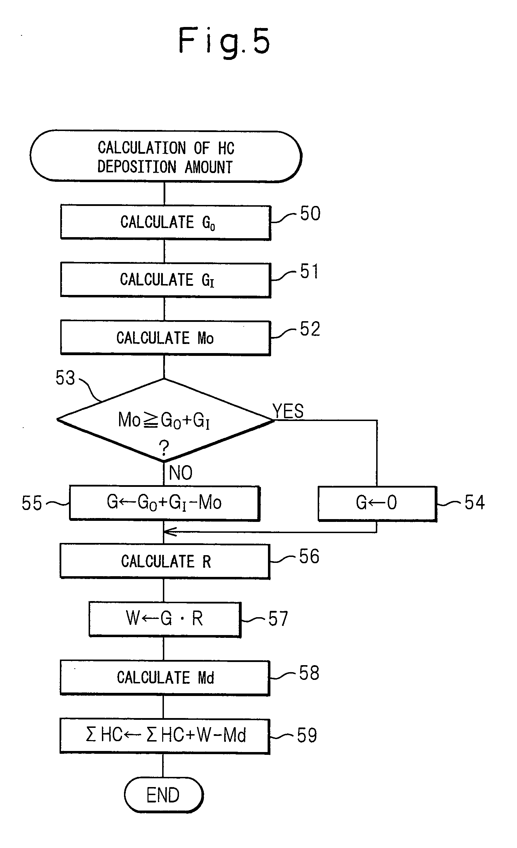

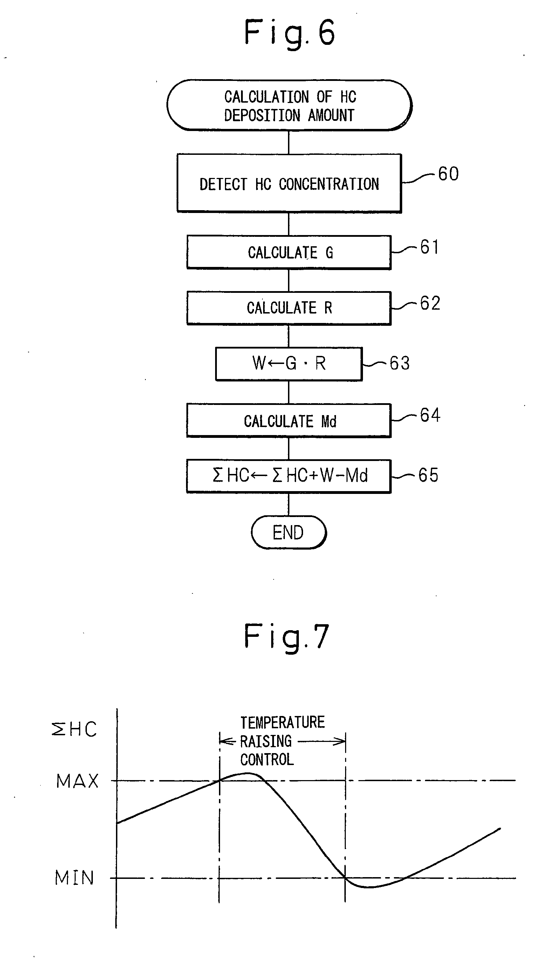

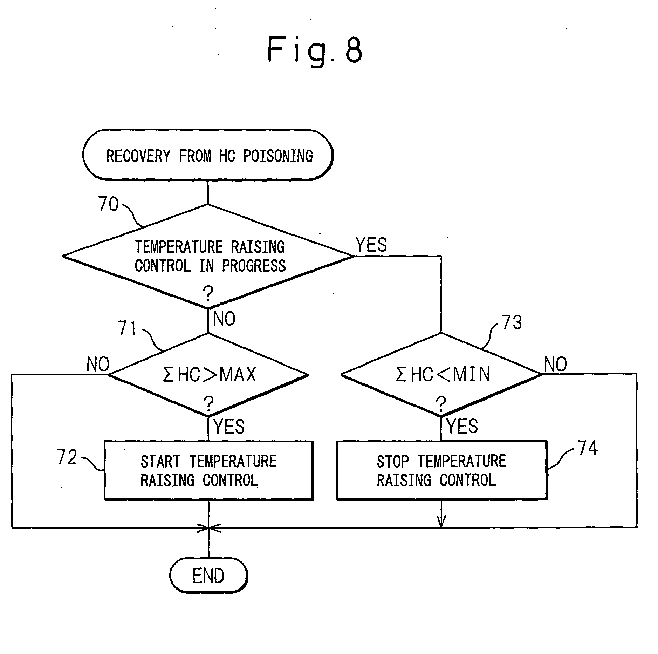

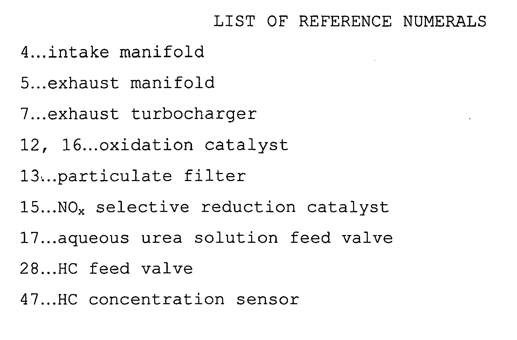

FIG. 1 is an overview of a compression ignition type internal combustion engine, FIG. 2 is an overview showing another embodiment of a compression ignition type internal combustion engine, FIG. 3 is a view showing an oxidation rate, FIG. 4 is a view showing a HC deposition rate etc., FIG. 5 is a flowchart for calculating an HC deposition amount, FIG. 6 is a flowchart for calculating the HC deposition amount, FIG. 7 is a time chart showing temperature raising control, and FIG. 8 is a flowchart for restoration from HC poisoning.

### BEST MODE FOR CARRYING OUT THE INVENTION

FIG. 1 shows an overview of a compression ignition type internal combustion engine.

Referring to FIG. 1, 1 indicates an engine body, 2 a combustion chamber of each cylinder, 3 an electronic control type fuel injector for injecting fuel into each combustion chamber 2, 4 an intake manifold, and 5 an exhaust manifold. The intake manifold 4 is connected through an intake duct 6 to the outlet of a compressor 7a of an exhaust turbocharger 7, while the inlet of the compressor 7a is connected through an input air amount detector 8 to an air cleaner 9. Inside the intake duct 6, a throttle valve 10 driven by a step motor is arranged. Furthermore, around the intake duct 6 is arranged a cooling device 11 for cooling the intake air flowing into the intake duct 6. In the embodiment shown in FIG. 1, engine coolant water is guided into the cooling device 11 where the engine coolant water is used to cool the intake air.

On the other hand, the exhaust manifold 5 is connected to the inlet of the exhaust turbine 7b of the exhaust turbocharger 7. The outlet of the exhaust turbine 7b is connected to the inlet of the oxidation catalyst 12. Downstream of this oxidation catalyst 12, a particulate filter 13 is arranged adjoining the oxidation catalyst 12 for trapping particulate matter contained in the exhaust gas. The outlet of this particulate filter 13 is connected through the exhaust pipe 14 to the inlet of the NOₓ selective reduction catalyst 15. The outlet of this NOₓ selective reduction catalyst 15 is connected to an oxidation catalyst 16.

Inside the exhaust pipe 14 upstream of the NOₓ selective reduction catalyst 15, an aqueous urea solution feed valve 17 is arranged. This aqueous urea solution feed valve 17 is connected through a feed pipe 18 and a feed pump 19 to an aqueous urea solution tank 20. The aqueous urea solution stored in the aqueous urea solution tank 20 is injected by the feed pump 19 from the aqueous urea solution feed valve 17 to the exhaust gas flowing through the inside of the exhaust pipe 14. Due to the ammonia produced from the urea ((NH₂)₂CO+H₂O→2NH₃+CO₂) the NOₓ contained in the exhaust gas is reduced at the NOₓ selective reduction catalyst 15.

The exhaust manifold 5 and the intake manifold 4 are connected through an exhaust gas recirculation (hereinafter "EGR") passage 21. Inside the EGR passage 21, an electronic control type EGR control valve 22 is arranged. Further, around the EGR passage 21 is arranged a cooling device 23 for cooling the EGR gas flowing through the EGR passage 21. In the embodiment shown in FIG. 1, the engine coolant water is guided to the cooling device 23 where the engine coolant water cools the EGR gas. On the other hand, each fuel injector 3 is connected through a fuel feed pipe 24 to a common rail 25. This common rail 25 is connected through an electronic control type variable discharge fuel pump 26 to a fuel tank 27. The fuel stored in the fuel tank 27 is fed by the fuel pump 26 to the common rail 25. The fuel fed to the common rail 25 is fed through each fuel feed pipe 24 to each fuel injector 3. Further, the exhaust manifold 5 is provided with an HC feed valve 28 for feeding a hydrocarbon, that is, HC, into the exhaust manifold 5. In the embodiment shown in FIG. 1, this HC is comprised of diesel fuel.

The electronic control unit 30 is comprised of a digital computer provided with a ROM (read only memory) 32, RAM (random access memory) 33, CPU (microprocessor) 34, input port 35, and output port 36 all connected to each other by a bidirectional bus 31. The oxidation catalyst 12 has a temperature sensor 45 attached to it for detecting a bed temperature of the oxidation catalyst 12, while the NOₓ selective reduction catalyst 15 has a temperature sensor 46 attached to it for detecting a bed temperature of the NOₓ selective reduction catalyst 15. Further, inside the exhaust pipe 14 is arranged an HC concentration sensor 47 for detecting the HC concentration in the exhaust gas flowing into the NOₓ selective reduction catalyst 15. The output signals of these temperature sensors 45 and 46, HC concentration sensor 47, and input air amount detector 8 are input through the corresponding AD converters 37 to the input port 35.

Further, the accelerator pedal 40 has a load sensor 41 connected to it for generating an output voltage proportional to the amount of depression L of the accelerator pedal 40. The output voltage of the load sensor 41 is input through the corresponding AD converter 37 to the input port 35. Furthermore, input port 35 has a crank angle sensor 42 connected to it for generating an output pulse every time the crankshaft rotates by for example 15°. On the other hand, the output port 36 is connected through a corresponding drive circuit 38 to each fuel injector 3, a step motor for driving the throttle valve 10, an aqueous urea solution feed valve 17, a feed pump 19, an EGR control valve 22, a fuel pump 26, and an HC feed valve 28.

The oxidation catalyst 12 for example carries a precious metal catalyst such as platinum. This oxidation catalyst 12 has the action of converting the NO contained in the exhaust gas to NO₂ and the action of oxidizing the HC contained in the exhaust gas. That is, NO₂ is stronger in oxidation ability compared with NO, therefore, if NO is converted to NO₂, the oxidation reaction of the particulate matter trapped on the particulate filter 13 is promoted and the reduction action by the ammonia at the NOₓ selective reduction catalyst 15 is promoted. On the other hand, in the NOₓ selective reduction catalyst 15, as explained above, if HC deposits, the amount of adsorption of ammonia is reduced, so the NOₓ purification rate falls. Therefore, by oxidizing the HC by the oxidation catalyst 12 in this way, it is possible to avoid as much as possible the deposition of HC on the NOₓ selective reduction catalyst 15, that is, the HC poisoning of the NOₓ selective reduction catalyst 15.

As the particulate filter 13, it is possible to use a particulate filter not carrying a catalyst. For example, it is also possible to use a particulate filter carrying a precious metal catalyst such as platinum. On the other hand, the NOₓ selective reduction catalyst 15 is comprised of an ammonia adsorption type Fe zeolite having a high NOₓ purification rate at a low temperature. Further, the oxidation catalyst 16 carries a precious metal catalyst such as for example platinum. This oxidation catalyst 16 acts to oxidize the ammonia leaked out from the NOₓ selective reduction catalyst 15.

FIG. 2 shows another embodiment of a compression ignition type internal combustion engine. In this embodiment, the particulate filter 13 is arranged downstream of the oxidation catalyst 16. Therefore, in this embodiment, the outlet of the oxidation catalyst 12 is connected through the exhaust pipe 14 to the inlet of the NOₓ selective reduction catalyst 15.

In this regard, in the internal combustion engine shown in FIG. 1 and FIG. 2, usually the majority of the HC exhausted from the engine is oxidized at the oxidation catalyst 12, but part of the HC is not oxidized at the oxidation catalyst 12 and flows into the NOₓ selective reduction catalyst 15 to deposit at the NOₓ selective reduction catalyst 15. In particular when the oxidation catalyst 12 is not activated such as at the time of engine startup, a large amount of HC flows into the NOₓ selective reduction catalyst 15 and deposits at the NOₓ selective reduction catalyst 15. Therefore, first, the oxidation action of HC of the oxidation catalyst 12 will be explained.

FIG. 3 shows the relationship between the bed temperature T_{O} of the oxidation catalyst 12 and the HC oxidation rate M_{O} (g/sec), that is, the amount of HC able to be oxidized per unit time. As will be understood from FIG. 3, when the bed temperature T_{O} of the oxidation catalyst 12 is about 200°C or less, that is, when the oxidation catalyst 12 is not activated, the oxidation rate M_{O} is zero. Therefore, at this time, the HC flowing into the oxidation catalyst 12 passes right through the oxidation catalyst 12. On the other hand, when the oxidation catalyst 12 is activated, when the amount of HC flowing into the oxidation catalyst 12 per unit time is smaller than the oxidation rate M_{O} determined from the bed temperature T_{O} of the oxidation catalyst 12, all of the inflowing HC is oxidized at the oxidation catalyst 12, while when the amount of HC flowing into the oxidation catalyst 12 per unit time is greater than the oxidation rate M_{O} determined from the bed temperature T_{O} of the oxidation catalyst 12, the amount of HC over the oxidation rate M_{O} passes through the oxidation catalyst 12.

The HC passing through the oxidation catalyst 12 flows into the NOₓ selective reduction catalyst 15 and deposits on the NOₓ selective reduction catalyst 15. FIG. 4(A) shows the deposition rate R of HC deposited on the NOₓ selective reduction catalyst 15 at this time. As will be understood from FIG. 4(A), the HC deposition rate R becomes higher the lower the bed temperature Tn of the NOₓ selective reduction catalyst 15. Therefore, even if the amount of HC flowing into the NOₓ selective reduction catalyst 15 is the same, the lower the bed temperature Tn of the NOₓ selective reduction catalyst 15, the larger the amount of HC deposited on the NOₓ selective reduction catalyst 15.

The HC passing through the oxidation catalyst 12 in this way flows into the NOₓ selective reduction catalyst 15 and deposits at the NOₓ selective reduction catalyst 15. However, this deposited HC can be made to desorb from the NOₓ selective reduction catalyst 15 by raising the temperature of the NOₓ selective reduction catalyst 15. Next, this will be explained with reference to FIG. 4(B).

FIG. 4(B) shows the relationship between the bed temperature Tn of the NOₓ selective reduction catalyst 15 and the HC desorption rate Md (g/sec), that is, the amount of HC desorbed from the NOₓ selective reduction catalyst 15 per unit time. As shown in FIG. 4(B), when the bed temperature Tn of the NOₓ selective reduction catalyst 15 exceeds about 350°C, the desorption rate Md rises. In FIG. 4(B), the substantially 350°C shown by TF becomes the desorption start temperature. Therefore, if raising the bed temperature Tn of the NOₓ selective reduction catalyst 15 to the desorption start temperature TF or more, HC can be desorbed from the NOₓ selective reduction catalyst 15.

In an embodiment according to the present invention, when HC should be desorbed from the NOₓ selective reduction catalyst 15, HC is fed to the oxidation catalyst 12 and the heat of oxidation reaction of the HC is used to raise the temperature of the NOₓ selective reduction catalyst 15. This feed of HC can be performed for example by injecting fuel into the combustion chamber 2 in the exhaust stroke and can be performed by feeding HC into the engine exhaust passage. In the embodiment shown in FIG. 1 and FIG. 2, the HC is fed by injection of diesel oil from the HC feed valve 28.

Now, as explained above, if the HC deposition amount to the NOₓ selective reduction catalyst 15 increases, the amount of ammonia able to be adsorbed by the NOₓ selective reduction catalyst 15 decreases and therefore the NOₓ purification rate ends up falling. Therefore, in the present invention, HC deposition estimating means for estimating the amount of deposition of HC at the NOₓ selective reduction catalyst 15 is provided. When the amount of deposition of HC estimated by this HC deposition estimating means exceeds a predetermined allowable deposition amount, the NOₓ selective reduction catalyst 15 is raised in temperature to make the deposited HC desorb from the NOₓ selective reduction catalyst 15 and thereby restore the NOₓ selective reduction catalyst 15 from the HC poisoning.

In this regard, when using the HC deposition estimating means to estimate the HC deposition amount in this way, there is the method of finding the HC deposition amount entirely by calculation and the method of finding it from the detection value of the HC concentration sensor 47. FIG. 5 shows the calculation routine in the case of finding the HC deposition amount entirely by calculation, while FIG. 6 shows the calculation routine in the case of finding the HC deposition amount from the detection value of the HC concentration sensor 47. Each calculation routine is executed by interruption every predetermined time interval.

First, explaining the routine for calculation of the HC deposition amount shown in FIG. 5, at step 50, the exhaust HC amount G_{O} exhausted from the engine per unit time is calculated. The exhaust HC amount G_{O} changing in accordance with this engine operating state is stored in the ROM 32. Next, at step 51, for example, the HC feed amount G_{I} fed from the HC feed valve 28 to raise the temperature of the NOₓ selective reduction catalyst 15 is calculated. Next, at step 52, the oxidation rate M_{O} shown in FIG. 3 is calculated based on the bed temperature T_{O} of the oxidation catalyst 12. Next, at step 53, it is judged if the oxidation rate M_{O} is larger than the sum (G_{O}+G_{I}) of the exhaust HC amount G_{O} and the feed HC amount G_{I}. When M_{O}≥G_{O}+G_{I}, the routine proceeds to step 55 where the pass-thru amount G is made zero, then the routine proceeds to step 56. As opposed to this, when M_{O}<G_{O}+G_{I}, the routine proceeds to step 55 where the pass-thru amount G is made G_{O}+G_{I}-M_{O}, then the routine proceeds to step 56.

At step 56, the HC deposition rate R shown in FIG. 4(A) is calculated. Next, at step 57, the pass-thru amount G of HC is multiplied with the HC deposition rate R to calculate the new HC deposition amount W(=G·R) to the NOₓ selective reduction catalyst 15. Next, at step 58, the desorption rate Md shown in FIG. 4(B) is calculated based on the bed temperature Tn of the NOₓ selective reduction catalyst 15, next, at step 59, the new HC deposition amount W is added to the HC deposition amount ΣHC and the desorption rate Md is subtracted from the HC deposition amount ΣHC to calculate the HC deposition amount ΣHC.

That is, in the embodiment shown in FIG. 5, the amount (G_{O}+G_{I}) of HC flowing into the NOₓ selective reduction catalyst 15 is calculated, and the HC deposition estimating means estimates the HC deposition amount ΣHC using the HC deposition rate R to the NOₓ selective reduction catalyst 15 preset for the calculated inflowing HC amount (G_{O}+G_{I}) and the HC desorption rate Md from the NOₓ selective reduction catalyst 15.

Next, explaining the routine for calculation of the HC deposition amount shown in FIG. 6, at step 60, the HC concentration in the exhaust gas flowing into the NOₓ selective reduction catalyst 15 is detected by the HC concentration sensor 47. Next, at step 61, the amount G of HC flowing into the NOₓ selective reduction catalyst 15 per unit time is calculated based on the HC concentration detected by the HC concentration sensor 47 and the exhaust gas amount, that is, the intake air amount detected by the input air amount detector 8.

Next, at step 62, the HC deposition rate R shown in FIG. 4(A) is calculated. Next, at step 63, the inflowing amount G of HC is multiplied with the HC deposition rate R to calculate the new HC deposition amount W(=G·R) for the NOₓ selective reduction catalyst 15. Next, at step 64, the desorption rate MD shown in FIG. 4(B) is calculated based on the bed temperature Tn of the NOₓ selective reduction catalyst 15, next, at step 65, the new HC deposition amount W is added to the HC deposition amount ΣHC and the desorption rate Md is subtracted from the HC deposition amount ΣHC to calculate the HC deposition amount ΣHC.

That is, in the embodiment shown in FIG. 6, the HC concentration sensor 47 for detecting the HC concentration in the exhaust gas flowing into the NOₓ selective reduction catalyst 15 is provided, and the amount G of HC flowing into the NOₓ selective reduction catalyst 15 is formed by this HC concentration sensor 47. The HC deposition estimating means estimates the HC deposition amount ΣHC using the HC deposition rate R to the NOₓ selective reduction catalyst 15 preset for the found inflowing HC amount G and the HC desorption rate Md from the NOₓ selective reduction catalyst 15.

In the present invention, the HC deposition amount ΣHC is found during engine operation in this way. Temperature raising control is performed based on this HC deposition amount ΣHC to restore the NOₓ selective reduction catalyst 15 from HC poisoning. That is, as shown in FIG. 7, when the HC deposition amount ΣHC exceeds a predetermined allowable deposition amount MAX, the temperature raising control of the NOₓ selective reduction catalyst 15 is started. When the HC deposition amount ΣHC falls to a predetermined lower limit value MIN after starting to raise the temperature of the NOₓ selective reduction catalyst 15, the temperature raising action of the NOₓ selective reduction catalyst 15 is stopped.

FIG. 8 shows the routine for recovery from HC poisoning. This routine is executed by interruption every predetermined time interval.

Referring to FIG. 8, first, at step 70, it is judged if the temperature raising control is in progress. When the temperature raising control is not in progress, the routine proceeds to step 71 where it is judged if the HC deposition amount ΣHC exceeds the allowable deposition amount MAX. When ΣHC>MAX, the routine proceeds to step 72 where the temperature raising control is started. When the temperature raising control is started, the routine proceeds from step 70 to step 73 where it is judged if the HC deposition amount ΣHC becomes less than the lower limit value MIN. When ΣHC<MIN, the routine proceeds to step 74 where the temperature raising control is stopped.

## Claims

1. An exhaust purification device of an internal combustion engine arranging an NOₓ selective reduction catalyst in an engine exhaust passage, feeding urea to said NOₓ selective reduction catalyst, and using ammonia generated from the urea to selectively reduce NOₓ contained in exhaust gas, wherein HC deposition estimating means for estimating an amount of HC deposited at said NOₓ selective reduction catalyst is provided, and a temperature of the NOₓ selective reduction catalyst is raised to make deposited HC desorb from the NOₓ selective reduction catalyst when an amount of deposition of HC estimated by the HC deposition estimating means exceeds a predetermined allowable deposition amount, and thereby restores the NOₓ selective reduction catalyst from HC poisoning.

2. An exhaust purification device of an internal combustion engine as claimed in claim 1, wherein an amount of HC flowing into said NOₓ selective reduction catalyst is calculated and said HC deposition estimating means estimates said HC deposition amount using an HC deposition rate at the NOₓ selective reduction catalyst preset for a calculated inflowing HC amount and an HC desorption rate from the NOₓ selective reduction catalyst.

3. An exhaust purification device of an internal combustion engine as claimed in claim 1, where HC concentration sensor for detecting an HC concentration in an exhaust gas flowing into the NOₓ selective reduction catalyst is provided, an amount of HC inflowing into the NOₓ selective reduction catalyst is found by said HC concentration sensor, and said HC deposition estimating means estimates said HC deposition amount using an HC deposition rate at the NOₓ selective reduction catalyst preset for a found inflowing HC amount and an HC desorption rate from the NOₓ selective reduction catalyst.

4. An exhaust purification device of an internal combustion engine as claimed in claim 1, where an oxidation catalyst is arranged in the engine exhaust passage upstream of the selective reduction catalyst, HC is fed into the oxidation catalyst when the NOₓ selective reduction catalyst should be raised in temperature, and a temperature of the NOₓ selective reduction catalyst is raised by a heat of oxidation reaction of the HC.

5. An exhaust purification device of an internal combustion engine as claimed in claim 1, wherein when the HC deposition amount falls to a predetermined lower limit value after starting to raise a temperature of the NOₓ selective reduction catalyst, a temperature raising action of the NOₓ selective reduction catalyst is stopped.
